# EUROPEAN PATENT APPLICATION

(11) **EP 4 794 339 A1**
(43) Date of publication of application: **19.08.2026**
(21) Application number: 24876435.9
(22) Date of filing: 29.09.2024
(51) Int. Cl.: H04N 21/234

(54) **METHOD AND APPARATUS FOR ACQUIRING VIDEO-RELATED CONTENT, ELECTRONIC DEVICE, AND MEDIUM**

(30) Priority: 13.10.2023 CN 202311329594
(71) Applicant: Beijing Zitiao Network Technology Co., Ltd., Beijing 100190 (CN)
(72) Inventor: JIANG, Jinhui, Beijing 100028 (CN); TANG, Yunfei, Beijing 100028 (CN); ZHU, Kewei, Beijing 100028 (CN)
(74) Representative: Isarpatent
(86) International application number: PCT/CN2024/122232
(87) International publication number: WO 2025/077619

(57) **Abstract**

Embodiments of the present disclosure relate to a method and apparatus for acquiring video-related content, a device, and a medium. The method comprises: on the basis of a video, generating a natural language text associated with the video. The method further comprises: on the basis of the natural language text, acquiring video-related content associated with the video, wherein the video-related content comprises at least one of a generated video, a retrieved video, and a retrieved image-text. The method further comprises displaying the natural language text and a thumbnail corresponding to the video-related content.

## Description

### CROSS-REFERENCE TO RELATED APPLICATION(S)

The present application claims priority to Chinese Patent Application No. 202311329594.6, filed with the China National Intellectual Property Administration on October 13, 2023 and entitled "METHOD AND APPARATUS FOR ACQUIRING VIDEO-RELATED CONTENT, ELECTRONIC DEVICE, AND MEDIUM", the disclosure of which is incorporated herein by reference in its entirety.

### FIELD

Embodiments of the present disclosure relate to the computer field, and more specifically, to a method and apparatus for obtaining video-related content, an electronic device, and a medium.

### BACKGROUND

Content obtaining refers to the automatic obtaining of content associated with a given text or image based on requirements. On a social platform, content generation and retrieval are widely used in the field of product recommendation, and refer to the process where a user uploads a text or an image on the platform, and the platform obtains content related to the uploaded text or image and recommends the content to the user.

Currently, most related content obtaining methods involve recognizing texts or objects in an image and then searching for content associated with the texts or objects. Information contained in the text and/or image is often limited and cannot fully express the user's intent, resulting in a lack of precision in the related content recommended by the platform.

### SUMMARY

Embodiments of the present disclosure provide a method and an apparatus for obtaining video-related content, an electronic device, and a computer-readable storage medium.

According to a first aspect of the present disclosure, a method for obtaining video-related content is provided. The method includes generating, based on a video, a natural language text associated with the video. The method further includes obtaining, based on the natural language text, video-related content associated with the video, where the video-related content includes at least one of a generated video, a retrieved video, or a retrieved image-text. The method further includes displaying the natural language text and a thumbnail corresponding to the video-related content.

According to a second aspect of the present disclosure, an apparatus for obtaining video-related content is provided. The apparatus includes a natural language text generation module, configured to generate, based on a video, a natural language text associated with the video. The apparatus further includes a video-related content obtaining module, configured to obtain, based on the natural language text, video-related content associated with the video, where the video-related content includes at least one of a generated video, a retrieved video, or a retrieved image-text. The apparatus further includes a video-related content display module, configured to display the natural language text and a thumbnail corresponding to the video-related content.

According to a third aspect of the present disclosure, an electronic device is provided. The electronic device includes a processor and a memory coupled to the processor. The memory has instructions stored therein that, when executed by the processor, cause the electronic device to perform the method according to the first aspect.

According to a fourth aspect of the present disclosure, a computer-readable storage medium is provided. The computer-readable storage medium has one or more computer instructions stored therein that, when executed by a processor, cause the method according to the first aspect to be implemented.

The summary section is provided to introduce a selection of concepts in a simplified form, and the concepts will be further described in the following detailed description. The summary section is not intended to identify key features or principal features of the claimed subject matter, nor is it intended to limit the scope of the claimed subject matter.

### BRIEF DESCRIPTION OF THE DRAWINGS

The foregoing and other features, advantages, and aspects of embodiments of the present disclosure will become more apparent with reference to the accompanying drawings and the following detailed description. In the accompanying drawings, the same or similar reference numerals denote the same or similar elements, in which:
FIG. 1 is a schematic diagram of an example environment in which a method for obtaining video-related content according to some embodiments of the present disclosure may be implemented;
FIG. 2 is a flowchart of a method for obtaining a video-related content according to some embodiments of the present disclosure;
FIG. 3 is a flowchart of a method for obtaining video-related content according to some embodiments of the present disclosure;
FIG. 4 is a schematic diagram of a process of generating a plurality of natural language texts according to some embodiments of the present disclosure;
FIG. 5 is a flowchart of a process of generating a first extended term according to some embodiments of the present disclosure;
FIG. 6A is a schematic diagram of displaying video-related content according to some embodiments of the present disclosure;
FIG. 6B is a schematic diagram of an interface for combined publishing of a video and video-related content according to some embodiments of the present disclosure;
FIG. 7 is a block diagram of an apparatus for obtaining video-related content according to some embodiments of the present disclosure; and
FIG. 8 is a block diagram of an electronic device according to some embodiments of the present disclosure.

Throughout the drawings, the same or similar reference numerals denote the same or similar elements.

### DETAILED DESCRIPTION OF EMBODIMENTS

Embodiments of the present disclosure will be described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

In the description of the embodiments of the present disclosure, the term "include" and similar terms should be understood as open-ended inclusion, namely, "including but not limited to". The term "based on" should be understood as "at least partly based on". The term "an embodiment" or "the embodiment" should be understood as "at least one embodiment". The terms "first", "second", and the like may refer to different objects or the same object, unless otherwise explicitly defined. Other explicit and implicit definitions may also be included below.

Most content obtaining methods are designed for user-input texts and/or images. When a user inputs a text and/or an image, a client sends the input text and/or image to a server. The server recognizes words and objects in the text and/or image, then obtains content from a database that is associated with the recognized words and objects, and sends the obtained content to the client for the user to view.

However, conventional content obtaining methods are unable to recognize videos. Information that can be contained in images and texts is limited, whereas videos can contain information such as real content, specific scenes, and audio. Moreover, the amount of information that videos can contain is adjustable based on a video duration. Therefore, compared to texts and images, videos can more accurately reflect the user's intent. In addition, a platform mostly obtains related content in the form of images and texts, lacking related content in the form of videos. This limitation prevents the user from finding the most desired information in the obtained related content.

In order to solve the above-mentioned problems, the embodiments of the present disclosure provide a solution for obtaining video-related content. This solution converts content contained in a video into an input text, then uses a model (e.g., a pre-trained generative model) to understand the input text to generate an output text, and obtains video-related content based on the understood output text. The video-related content includes at least one of a generated video, a retrieved video, or a retrieved image-text. This solution utilizes the model to understand the input video text, thereby improving the accuracy of video understanding and improving the precision of understanding the user's intent. Therefore, the video-related content obtained based on the understood output text can better meet user expectations and provide answers desired by the user. The video-related content obtained by this solution includes not only the image-text but also the generated video and/or the retrieved video, which enhances the comprehensiveness of the related content, thereby improving the user experience.

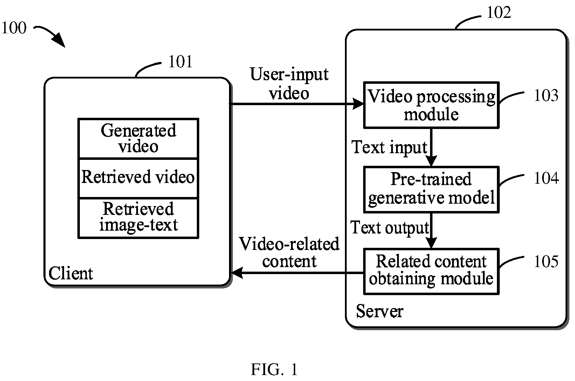

FIG. 1 is a schematic diagram of an example environment 100 in which a method for obtaining related content according to some embodiments of the present disclosure may be implemented. As shown in FIG. 1, the example environment 100 may include a server 102. The server may be a single server, or a server cluster (e.g., cloud) configured in a centralized or distributed manner. In the embodiments of the present disclosure, the video-related content may be obtained by the server. It should be understood that the video-related content may also be obtained by any other device with a computing capability. Herein, an architecture and functions of the server 102 are described only for illustrative purposes and do not imply any limitation on the scope of the present disclosure.

The example environment 100 may also include a client 101, which may be a user terminal, a mobile device, a computer, etc. In the embodiments of the present disclosure, the server 102 obtains the video-related content and transmits the video-related content to the client 101. The client 101 serves as a device for displaying the video-related content, which may include a display screen, thereby allowing the user to view, through the display screen, the video-related content transmitted from the server 102.

Referring to FIG. 1, the server 102 may include a video processing module 103, a pre-trained generative model 104, and a related content obtaining module 105. The video processing module 103 is configured to extract information from a user-input video and convert the extracted information into a text form to generate an input text for the pre-trained generative model 104. In the embodiments of the present disclosure, the pre-trained generative model 104 may be one of models with natural language processing capabilities achieved through pre-training, such as a large language model. The pre-trained generative model 104 is configured to process the text input by the video processing module 103. A processing method specifically includes understanding and analyzing the input text and outputting an understood text, thereby achieving a deep interpretation of video information. The output text can accurately express the user's intent. The related content obtaining module 105 is configured to receive the text output by the pre-trained generative model 104 and obtain the video-related content based on the output text.

In the embodiments of the present disclosure, the obtained video-related content includes at least one of a generated video, a retrieved image-text, or a retrieved video. The diverse categories can enhance the comprehensiveness of the related content, thereby increasing the probability of the user obtaining target content. For example, the video-related content may include a video generated by the model based on the text, a video retrieved from a video website, or an image-text obtained from a webpage and an application.

It should be understood that an architecture and functions of the example environment 100 are described only for illustrative purposes and do not imply any limitation on the scope of the present disclosure. The embodiments of the present disclosure may also be applied to other environments with different structures and/or functions.

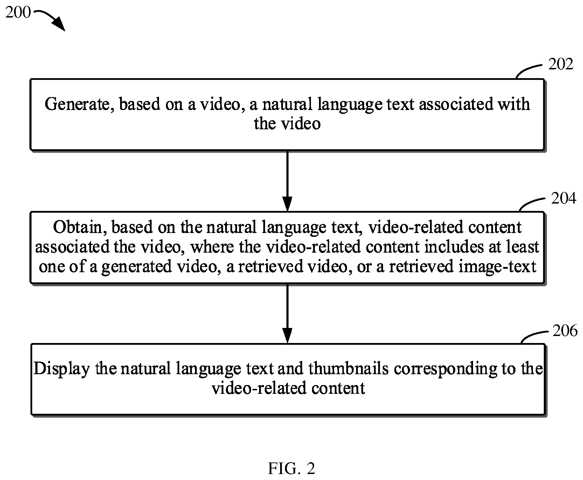

The process according to the embodiments of the present disclosure will be described in detail below in conjunction with FIG. 2 to FIG. 8. For ease of understanding, all specific data mentioned in the following description is exemplary, and is not intended to limit the scope of protection of the present disclosure. It should be understood that the embodiments described below may further include additional actions not shown and/or may omit actions shown, and the scope of the present disclosure is not limited in this regard.

FIG. 2 is a flowchart of a method 200 for obtaining video-related content according to some embodiments of the present disclosure. At block 202, based on a video, a natural language text associated with the video is generated. For example, as shown in FIG. 1, the video processing module 103 extracts information from a user-input video and converts the extracted information into a text form to generate a first text. In the embodiments of the present disclosure, the extracted video information may include objects, persons, a text, and/or audio information included in the video. The more comprehensive the extracted video information is, the more information about the video can be obtained, thereby enabling the generated first text to more accurately express the meaning contained in the video. The information extracted by the video processing module 103 is mainly composed of discrete phrases and text paragraphs, which cannot fully convey the meaning the user intends to express in the video. The pre-trained generative model 104 may be used to understand the extracted information and generate the natural language text. In some embodiments, the first text may be converted to a second text in a natural language form. That is, the discrete phrases and text paragraphs in the first text are connected into a complete sentence to describe the user's intent.

For ease of understanding, here is an example: when the user intends to know how to buy a ticket at a train station, the first text may include content: "train station" and "buy tickets". After the pre-trained generative model 104 understands the first text, the output second text may be "How to use a self-service train ticket machine?" or "How to buy train tickets online?". It should be understood that the above-mentioned embodiments are exemplary and are not intended to limit the scope of the present disclosure.

At block 204, the video-related content associated with the video is obtained based on the natural language text, where the video-related content includes at least one of a generated video, a retrieved video, or a retrieved image-text. For example, referring to FIG. 1, after receiving the natural language text, the related content obtaining module 105 obtains the video-related content based on the meaning expressed in the natural language text. In the embodiments of the present disclosure, related content may be retrieved from a platform resource library. A specific process may involve extracting keywords from the natural language text and performing a retrieval in the platform resource library based on the keywords. In addition, the related content may also be a video that is automatically generated based on the second text.

At block 206, the natural language text and thumbnails corresponding to the video-related content are displayed. For example, referring to FIG. 1, both the natural language text and the video-related content may be displayed on the display screen of the client 101, thumbnails of the video-related content associated with the natural language text are displayed at corresponding positions of the natural language text, each thumbnail corresponds to a piece of video-related content, and the thumbnail may be a representative image of the video-related content. The user may view the related content corresponding to the thumbnail by selecting the thumbnail.

Accordingly, according to the method 200 in the embodiments of the present disclosure, obtaining of the video-related content can be implemented, and the deep interpretation of the video information can be achieved using the pre-trained generative model, thereby improving the understanding of the user's intent. The obtained video-related content includes at least one of a generated video, a retrieved image-text, or a retrieved video. The diverse categories can enhance the comprehensiveness of the related content, thereby increasing the probability of the user obtaining target content.

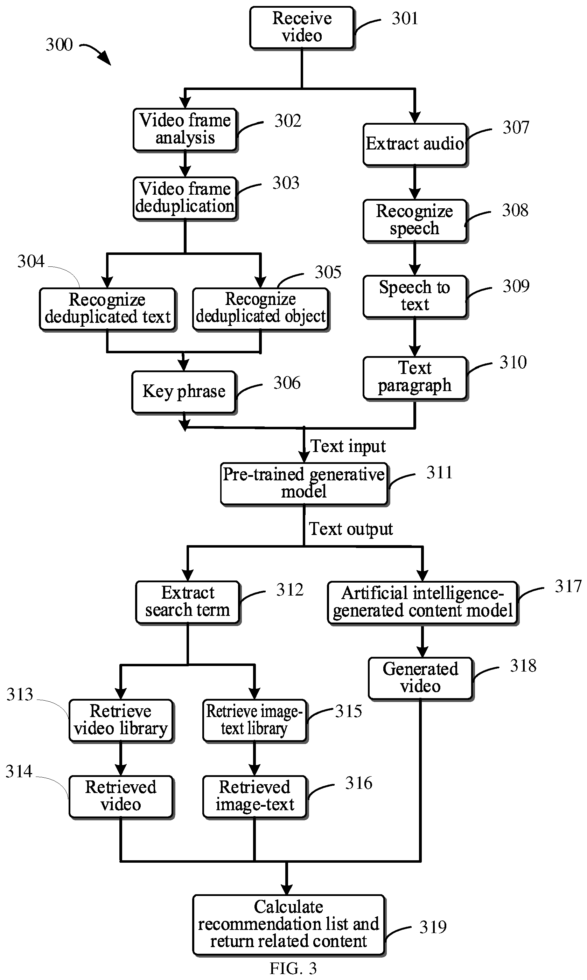

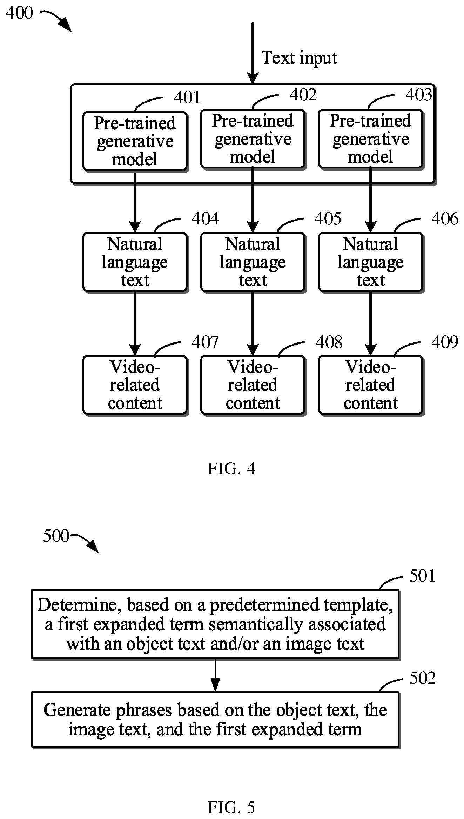

The process of obtaining the video-related content will be specifically described below in conjunction with FIG. 3 to FIG. 5. FIG. 3 illustrates specific steps of obtaining the video-related content, which are used to provide examples of video processing and related content obtaining based on the second text. FIG. 4 is an example including a plurality of pre-trained generative models, used to expand the second text in various methods to make obtained related content more comprehensive. FIG. 5 is a process of generating a first extended term, used to expand the first text to make extracted video information more comprehensive.

FIG. 3 is a flowchart of a method 300 for obtaining video-related content according to some embodiments of the present disclosure. At block 301, for example, as shown in FIG. 1, the client 101 receives a video sent by the user and then transmits the video to the server 102, and the video processing module 103 in the server 102 extracts a text from the video to generate a first text.

Blocks 302 to 310 illustrate an example process of video processing. At block 302, the video processing module 103 may first perform frame recognition and analysis on the video, where the frame recognition may be performed at different time intervals based on actual needs. The higher the frequency of the frame recognition and the more images obtained, the more information about the video can be obtained, thereby facilitating a more accurate description of the video.

At block 303, recognized video frames are deduplicated. In the embodiments of the present disclosure, deduplication may be performed using an image deduplication technology. For example, the similarity comparison may be performed between two consecutive video frames in a video frame portion. If the similarity is higher than a first threshold, the latter video frame is deleted from the video frame portion. Deduplicating the video and deleting redundant video frames can reduce the amount of data processing in the video content recognition step, and avoid repeated content recognition of the same video frames, thereby improving the processing efficiency.

At block 304, after deduplication, the content contained in a plurality of deduplicated frames may be recognized. In the embodiments of the present disclosure, the recognized video content may include an image text in the video, where the image text may include titles, subtitles, etc., in the deduplicated frames. A method for text recognition may be performed using an optical character recognition (OCR) service to recognize textual information in images, including titles, subtitles, key descriptions, etc. At block 305, the recognized video content may also include objects in the video, where the objects in the video may be persons, houses, cars, and other objects present in deduplicated frame images, as well as various actions, scenes, and so on.

At block 306, after recognizing the objects and the image text in the video, the recognized objects are converted into an object text, and keywords are extracted from the object text and the image text to obtain a key phrase. In the process of generating the key phrase, a common text conversion method may be used to generate the object text, or a common keyword extraction method may be used to generate the key phrase.

At block 307, in some embodiments, a method for generating the first text also includes extracting audio from the video, and separating an audio portion from the video. In the embodiments of the present disclosure, audio segmentation may be performed on a speech from a video with a long duration. In some embodiments, a time-based method is used for segmentation. The time-based method simply segments the audio in the video at predetermined intervals. For example, the audio is segmented once every 30 seconds, namely, the audio is divided into 30-second segments. The time-based method has the advantages of being simple and fast to operate.

In some embodiments, a spectral-based method may be used for segmentation. The spectral-based method refers to a method for determining performance of a signal by observing the variation of the amplitude of the signal with respect to frequency characteristics (amplitude-frequency characteristics). In some cases, it also includes the variation characteristics of the phase of the signal with respect to frequency characteristics (phase-frequency characteristics). Therefore, in some embodiments, using the spectral-based method to observe the characteristics of an audio signal for segmentation can ensure that each segmented audio clip is a complete sentence.

At block 308, speech recognition is performed on the extracted audio. In the embodiments of the present disclosure, the speech recognition may be performed using an automatic speech recognition (ASR) technology or other common speech recognition technologies, which may be specifically selected based on actual needs, as long as it satisfies the purpose of video speech recognition. In addition, the speech recognition may also be performed using a machine learning model. At block 309, the recognized speech is converted into text, to generate a text paragraph 310. In the embodiments of the present disclosure, speech-to-text conversion may be implemented based on known or future-developed algorithms or technologies for speech-to-text conversion in the art, which may be specifically selected based on actual needs, as long as it satisfies the purpose of speech-to-text conversion.

At block 311, the key phrase and the text paragraph are input as the first text into the pre-trained generative model, the pre-trained generative model understands the first text (i.e., a text input) and converts the first text into a second text (i.e., a text output) in a natural language form, namely, connecting discrete phrases and the text paragraph in the first text into a complete sentence to describe the user's intent. By using the pre-trained generative model to understand the text, the more semantically accurate natural language text with richer content can be generated, thereby facilitating subsequent video generation or retrieval.

At block 312, keywords are extracted from the second text to generate retrieval terms. For example, the second text may be "How to use a self-service train ticket machine?", and the extracted keywords may be "train ticket" and "self-service ticket machine". At block 313, a video library is retrieved. The video library is retrieved based on the retrieval terms extracted from the second text. By retrieving the video library based on the retrieval terms, a retrieved video 314 may be obtained.

Alternatively or additionally, at block 315, an image-text library is retrieved. The image-text library is retrieved based on the retrieval terms extracted from the second text, and videos in the image-text library may be historical image-texts stored on the platform or image-texts stored in an external resource library connected to the platform. By retrieving the image-text library based on the retrieval terms, a retrieved image-text 316 may be obtained.

At block 317, the video-related content obtained in the present disclosure also includes a generated video 318. A related video may be automatically generated using a generative content model based on the input second text. The generative content model may be other models or algorithms that generate related content based on input conditions or guidance, which may be specifically selected based on actual needs.

At block 319, a recommendation list is calculated, and the related content is returned. When the obtained video-related content includes a plurality of pieces of content, the relevance between each piece of content in the video-related content and the video is determined, and ranking of each piece of content in the recommendation list is determined based on the relevance. For example, the video-related content includes two retrieved videos, and the relevance between each of the two retrieved videos and the user-input video is calculated. The ranking of each video content in the recommendation list is determined based on the relevance, with the content having high relevance being ranked higher in the recommendation list and the content with low relevance being ranked lower in the recommendation list.

FIG. 4 is a schematic diagram of a process 400 of generating a plurality of natural language texts according to some embodiments of the present disclosure. In the embodiments of the present disclosure, a plurality of pre-trained generative models may be included, specifically a first pre-trained generative model 401, a second pre-trained generative model 402, and a third pre-trained generative model 403. During specific implementation, the number of the pre-trained generative models may be selected based on actual needs. An input for all the three pre-trained generative models is a first text. Different models may have different understandings of the first text. Therefore, a text output by the first pre-trained generative model 401 after understanding the first text is a first natural language text 404, a text output by the second pre-trained generative model 402 after understanding the first text is a second natural language text 405, and a text output by the third pre-trained generative model 403 after understanding the first text is a third natural language text 406. For ease of understanding, an example will be provided below. For example, if the first text includes "railway station" and "buy tickets", the first natural language text 404 may be "How to buy tickets at a railway station?", the second natural language text 405 may be "How to use a self-service train ticket machine?", and the third natural language text 406 may be "How to buy train tickets online?".

By setting the plurality of pre-trained generative models, different understandings of the first text can be generated, thereby generating a plurality of versions of second texts including a plurality of different sentences, resulting in a broader range of the obtained video-related content. In FIG. 4, first video-related content 407 is obtained based on the first natural language text 404, second video-related content 408 is obtained based on the second natural language text 405, and third video-related content 409 is obtained based on the third natural language text 406. The expansion of the scope of the video-related content provides the user with a wider range of selections and increases the probability of obtaining the information the user intends to search for.

FIG. 5 is a flowchart of a process 500 of generating a first extended term according to some embodiments of the present disclosure. At block 501, based on a predetermined template, the first extended term semantically associated with an object text and/or an image text is determined. In the embodiments of the present disclosure, extended terms of a number may include one or more other numbers in addition to the given number, and extended terms of a letter may include one or more other letters in addition to the given letter. According to the embodiments of the present disclosure, extended terms of a character may include one or more other characters in addition to the given character. The quantity or type of extended terms may be determined based on experience or needs. The extended term may also include at least one of the following: antonyms, synonyms, hypernyms, or hyponyms.

At block 502, phrases are generated based on the object text, the image text, and the first extended term. After the first extended term is generated, keywords may be extracted from the object text, the image text, and the first extended term to form a key phrase. According to the embodiments of the present disclosure, keyword extraction may be implemented based on word segmentation algorithms that are known in the art or any suitable word segmentation algorithm. The first extended term can expand the amount of the information of the first text. The first text serves as input data for the pre-trained generative model. An increase in the input data for the pre-trained generative model can enhance the accuracy of an output text of the pre-trained generative model, thereby improving the accuracy of understanding the user's intent.

In some embodiments of the present disclosure, for the speech-converted text paragraph, a second extended term semantically associated with the text paragraph may also be determined based on a preset semantic library, thereby expanding the amount of the information of a speech text, and improving the accuracy of the output text of the pre-trained generative model, and thus improving the accuracy of understanding the user's intent.

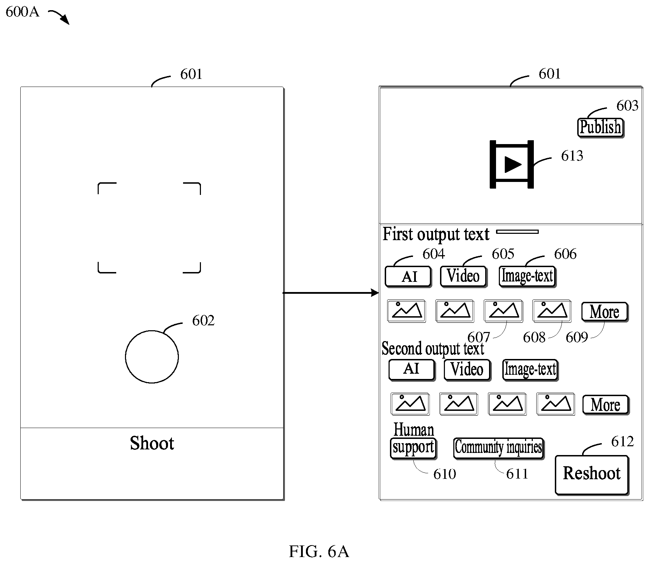

FIG. 6A is a schematic diagram of displaying video-related content according to some embodiments of the present disclosure. As shown in FIG. 6A, a device on a client may display a user interface 601. The user interface 601 displays a shooting control 602. In response to a touch operation of the user on the shooting control 602, the client starts shooting. After the shooting is completed, the client uploads a shot video to a server. The server obtains related content based on the video and returns the related content to the client. The user interface 601 displays the video-related content and a video playback control 613. In the embodiments of the present disclosure, the video-related content includes a first output text (e.g., a first question) and a second output text (e.g., a second question). During specific implementation, the number of output texts may be selected based on actual needs. The first output text and the second output text represent different meanings. A first set of thumbnails associated with the first output text is displayed at the corresponding position of the first output text, and a second group of thumbnails associated with the second output text is displayed at the corresponding position of the second output text. Each thumbnail corresponds to a piece of video-related content, and the thumbnail specifically refers to a representative image of the video-related content. The user may determine which set of thumbnails represents the video-related content that best matches the user's intent based on the meanings of the first output text and the second output text. By selecting the best matching thumbnail, the related content corresponding to the thumbnail can be viewed.

In the embodiments of the present disclosure, when the user's intent for the video input is a question, the first output text may be the first question "How to buy tickets at a railway station?", and the second output text may be the second question "How to buy train tickets online?". The two texts represent two questions with different meanings. The related content represented by the first set of thumbnails is answers to the first question, and the related content represented by the second set of thumbnails is answers to the second question. By distinguishing the obtained video-related content through the different meanings, the user can intuitively view information included in the related content, thereby enhancing the viewing and retrieval efficiency of the user, and improving the user experience.

In some embodiments of the present disclosure, the user interface 601 displays at least one of a first classification control 604, a second classification control 605, or a third classification control 606. Thumbnails displayed corresponding to the first classification control 604 represent generated videos in the related content. Thumbnails displayed corresponding to the second classification control 605 represent retrieved videos in the related content. Thumbnails displayed corresponding to the third classification control 606 represent retrieved image-texts in the related content. For example, in response to a touch operation of the user on the first classification control 604, the user interface 601 displays the thumbnails corresponding to the generated videos. The setup of the classification controls serves to distinguish the video-related content, which can further enhance the efficiency for the user to find the target content.

In some embodiments of the present disclosure, the thumbnails associated with the video-related content are arranged based on the relevance between the corresponding related content and the video. For example, the relevance between the related content corresponding to a first thumbnail 607 and the video is greater than the relevance between the related content corresponding to a second thumbnail 608 and the video.

In some embodiments of the present disclosure, the user interface 601 also displays a sixth control 603, a seventh control 609, an eighth control 610, a first control 611, and a control 612 for reshooting. In response to a touch operation of the user on the sixth control 603, the user-input video is published. In response to a touch operation of the user on the seventh control 609, more video-related content is displayed. In response to a touch operation of the user on the eighth control 610, an interface for human service is displayed. In response to a touch operation of the user on the first control 611, a second control, a third control, and/or a fourth control are displayed. The second control is configured to trigger the display of a text question interface when touched, the third control is configured to trigger the display of an image-text question interface when touched, and the fourth control is configured to trigger the display of a video question interface when touched, allowing the user to ask questions through texts or image-texts, or to ask questions again using videos. In response to a touch operation of the user on the control 612, a video shooting page is displayed again, allowing the user to reshoot the video.

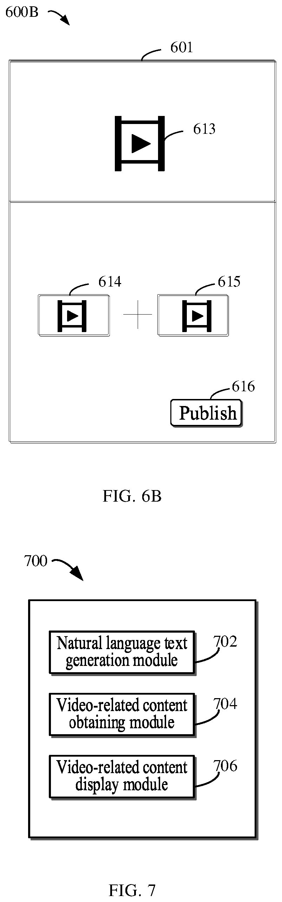

FIG. 6B is a schematic diagram of an interface for combined publishing of a video and video-related content according to some embodiments of the present disclosure. After the user selects the first thumbnail, the user interface 601 displays the interface shown in FIG. 6B, which displays a video thumbnail 614 and another thumbnail 615. In response to a touch operation of the user on a fifth control 616, the video and related content corresponding to the other thumbnail may be combined into a single piece of content for publishing. In this way, a question video and related answer videos can be retrieved, and a new complete video can be rapidly generated and published.

FIG. 7 is a block diagram of an apparatus 700 for obtaining video-related content according to some embodiments of the present disclosure. As shown in FIG. 7, the apparatus 700 includes a natural language generation module 702, a video-related content obtaining module 704, and a video-related content display module 706. The natural language text generation module 702 is configured to generate, based on a video, a natural language text associated with the video. The video-related content obtaining module 704 is configured to obtain, based on the natural language text, video-related content associated with the video, where the video-related content includes at least one of a generated video, a retrieved video, or a retrieved image-text. The video-related content display module 706 is configured to display the natural language text and thumbnails corresponding to the video-related content.

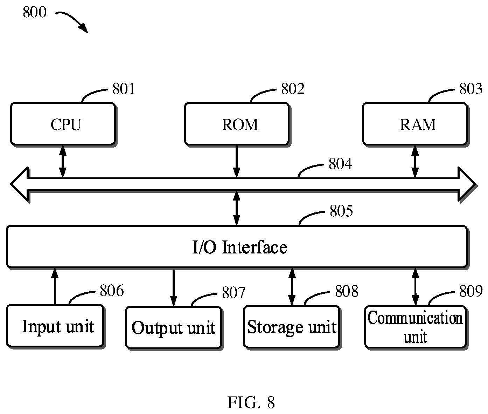

FIG. 8 is a block diagram of an electronic device 800 according to some embodiments of the present disclosure. The device 800 may be a device or means described in the embodiments of the present disclosure. As shown in FIG. 8, the device 800 includes a central processing unit (CPU) and/or a graphics processing unit (GPU) 801 that may perform a variety of appropriate actions and processing in accordance with computer program instructions stored in a read-only memory (ROM) 802 or computer program instructions loaded from a storage unit 808 into a random-access memory (RAM) 803. The RAM 803 may further store various programs and data required for the operation of the device 800. The CPU/GPU 801, the ROM 802, and the RAM 803 are connected to one another through a bus 804. An input/output (I/O) interface 805 is also connected to the bus 804. Although not shown in FIG. 8, the device 800 may further include a coprocessor.

A plurality of components in the device 800 are connected to the I/O interface 805, including: an input unit 806, such as a keyboard or a mouse; an output unit 807, such as various types of displays or speakers; a storage unit 808, such as a magnetic disk or an optical disc; and a communication unit 809, such as a network interface card, a modem, or a wireless communication transceiver. The communication unit 809 allows the device 800 to exchange information/data with other devices over a computer network such as the Internet and/or various telecommunication networks.

Each method or process described above may be performed by the CPU/GPU 801. For example, in some embodiments, the method may be implemented as a computer software program, which is tangibly contained in a machine-readable medium, such as the storage unit 808. In some embodiments, a part or all of the computer program may be loaded and/or installed onto the device 800 via the ROM 802 and/or the communication unit 809. When the computer program is loaded into the RAM 803 and executed by the CPU/GPU 801, one or more steps or actions in the method or process described above may be performed.

In some embodiments, the methods and processes described above may be implemented as a computer program product. The computer program product may include a computer-readable storage medium on which computer-readable program instructions for performing various aspects of the present disclosure are carried.

The computer-readable storage medium may be a tangible device that may retain and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples of the computer-readable storage medium (a non-exhaustive list) include: a portable computer disk, a hard disk, a random-access memory (RAM), a read-only memory (ROM), an erasable programmable read-only memory (EPROM) (or a flash memory), a static random-access memory (SRAM), a portable compact disk read-only memory (CD-ROM), a digital versatile disk (DVD), a memory stick, a floppy disk, a mechanical coding device, a punched card or an in-groove raised structure on which instructions are for example stored, and any suitable combination thereof. The computer-readable storage medium used herein is not to be interpreted as a transient signal, such as a radio wave or another freely propagating electromagnetic wave, an electromagnetic wave propagating through a waveguide or another transmission medium (e.g., an optical pulse through a fiber-optic cable), or an electrical signal transmitted over a wire.

The computer-readable program instructions described herein may be downloaded from the computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or network interface in each computing/processing device receives computer-readable program instructions from the network, and forwards the computer-readable program instructions for storage in the computer-readable storage medium in each computing/processing device.

The computer program instructions for performing the operations of the present disclosure may be assembly instructions, instruction set architecture (ISA) instructions, machine instructions, machinerelated instructions, microcode, firmware instructions, status setting data, or source code or object code written in any combination of one or more programming languages, including object-oriented programming languages as well as conventional procedural programming languages. The computer-readable program instructions may be completely executed on a computer of a user, partially executed on a computer of a user, executed as a standalone software package, partially executed on a computer of a user and partially executed on a remote computer, or completely executed on a remote computer or server. In a case of the remote computer, the remote computer may be connected to the computer of the user through any kind of network, including a local area network (LAN) or a wide area network (WAN), or may be connected to an external computer (e.g., connected through the Internet with the aid of an Internet service provider). In some embodiments, an electronic circuit, such as a programmable logic circuit, a field programmable gate array (FPGA), or a programmable logic array (PLA), is personalized by using state information of the computer-readable program instructions. The electronic circuit may execute the computer-readable program instructions to implement various aspects of the present disclosure.

These computer-readable program instructions may be provided to a processing unit of a general-purpose computer, a special-purpose computer, or another programmable data processing apparatus to produce a machine, such that the instructions, when executed by the processing unit of the computer or the other programmable data processing apparatus, create an apparatus for implementing functions/actions specified in one or more blocks in the flowcharts and/or the block diagrams. These computer-readable program instructions may also be stored in the computer-readable storage medium. These instructions cause a computer, a programmable data processing apparatus, and/or another device to work in a specific manner. Therefore, the computer-readable medium storing the instructions includes an artifact that includes instructions for implementing various aspects of the functions/actions specified in one or more blocks in the flowcharts and/or the block diagrams.

Alternatively, the computer-readable program instructions may be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement the functions/actions specified in one or more blocks in the flowcharts and/or the block diagrams.

The flowcharts and the block diagrams in the accompanying drawings illustrate possible system architectures, functions, and operations of the device, the method, and the computer program product according to a plurality of embodiments of the present disclosure. In this regard, each block in the flowcharts or the block diagrams may represent a module, a program segment, or a part of code, and the module, the program segment, or the part of code contains one or more executable instructions for implementing the specified logical functions. In some alternative implementations, functions marked in the blocks may also occur in an order different from that marked in the accompanying drawings. For example, two consecutive blocks may actually be executed substantially in parallel, or may sometimes be executed in a reverse order, depending on a function involved. It should also be noted that each block in the block diagrams and/or the flowcharts, and a combination of the blocks in the block diagrams and/or the flowcharts may be implemented by a dedicated hardware-based system that executes specified functions or actions, or may be implemented by a combination of dedicated hardware and computer instructions.

Various embodiments of the present disclosure have been described above. The foregoing descriptions are exemplary, not exhaustive, and are not limited to the disclosed embodiments. Numerous modifications and variations are apparent to those of ordinary skill in the art without departing from the scope and spirit of the described embodiments. The selection of the terms used herein is intended to best explain the principles, practical applications, or technical improvements to technologies in the market of the embodiments, or to allow others of ordinary skill in the art to understand the embodiments disclosed herein.

Some example implementations of the present disclosure are listed below.

Example 1. A method for obtaining video-related content, including:
generating, based on a video, a natural language text associated with the video;
obtaining, based on the natural language text, video-related content associated with the video, where the video-related content includes at least one of a generated video, a retrieved video, or a retrieved image-text; and
displaying the natural language text and a thumbnail corresponding to the video-related content.

Example 2. The method according to Example 1, where generating the natural language text associated with the video includes:
generating, based on the video, a first text associated with the video, where the first text includes phrases;
   and
generating a second text as the natural language text based on the first text.

Example 3. The method according to any one of Examples 1 to 2, where generating the first text associated with the video includes:
extracting a plurality of video frames from the video;
generating a plurality of deduplicated frames by deduplicating the plurality of video frames; and
generating the first text associated with the video by recognizing at least one deduplicated frame of the plurality of deduplicated frames.

Example 4. The method according to any one of Examples 1 to 3, where generating the first text associated with the video includes:
recognizing an object and an image text included in the deduplicated frame;
determining an object text associated with the object; and
generating, based on the object text and the image text, phrases associated with the video.

Example 5. The method according to any one of Examples 1 to 4, where generating the first text associated with the video further includes:
extracting audio from the video;
generating a speech text by performing speech recognition on the audio; and
generating the first text associated with the video based on the key phrase and the speech text.

Example 6. The method according to any one of Examples 1 to 5, where generating the phrases associated with the video includes:
determining, based on a predetermined template, a first extended term semantically associated with the object text and/or the image text; and
generating the phrases based on the object text, the image text, and the first extended term.

Example 7. The method according to any one of Examples 1 to 6, where generating the speech text includes:
converting the recognized speech into a text paragraph;
determining, based on a preset semantic library, a second extended term semantically associated with the text paragraph; and
generating the speech text based on the text paragraph and the second extended term.

Example 8. The method according to any one of Examples 1 to 7, where generating the natural language text includes:
generating a first output text based on understanding of the first text by a first pre-trained generative model;
generating a second output text based on understanding of the first text by a second pre-trained generative model; and
generating the second text based on the first output text and the second output text.

Example 9. The method according to any one of Examples 1 to 8, where obtaining the video-related content associated with the video includes:
obtaining the generated video through a generative content model based on the natural language text.

Example 10. The method according to any one of Examples 1 to 9, where obtaining the video-related content associated with the video further includes:
determining, based on semantics of the natural language text, a retrieval term associated with the natural language text; and
obtaining the retrieved video from a video library based on the retrieval term.

Example 11. The method according to any one of Examples 1 to 10, where obtaining the video-related content associated with the video further includes:
obtaining the retrieved image-text from an image-text library based on the retrieval term.

Example 12. The method according to any one of Examples 1 to 11, further including:
determining relevance between each of the video-related content and the video; and
determining a ranking of each of the video-related content based on the relevance.

Example 13. The method according to any one of Examples 1 to 12, where the natural language text includes at least a first question, and the method further includes:
displaying a first set of thumbnails of video-related content associated with the first question; and
displaying, in response to a user selecting a thumbnail from the first set of thumbnails, the video-related content corresponding to the selected thumbnail.

Example 14. The method according to any one of Examples 1 to 13, where displaying the first set of thumbnails of the video-related content associated with the first question includes:
displaying a plurality of categories associated with the video-related content; and
displaying, in response to the user selecting a first category from the plurality of categories, a thumbnail of the video-related content associated with the first category.

Example 15. The method according to any one of Examples 1 to 14, further including:
displaying a video shooting page in response to a touch operation of the user on a control for reshooting.

Example 16. The method according to any one of Examples 1 to 15, further including:
displaying a second control, a third control, and/or a fourth control in response to a touch operation of the user on a first control, where the second control is configured to trigger the display of a text question interface when touched, the third control is configured to trigger the display of an image-text question interface when touched, and the fourth control is configured to trigger the display of a video question interface when touched.

Example 17. The method according to any one of Examples 1 to 16, further including:
publishing, in response to a touch operation of the user on a fifth control, a combined video that includes the video and the video-related content.

Example 18. An apparatus for obtaining video-related content, including:
a natural language text generation module, configured to generate, based on a video, a natural language text associated with the video;
a video-related content obtaining module, configured to obtain, based on the natural language text, video-related content associated with the video, where the video-related content includes at least one of a generated video, a retrieved video, or a retrieved image-text; and
a video-related content display module, configured to display the natural language text and a thumbnail corresponding to the video-related content.

Example 19. The apparatus according to Example 18, where the natural language text generation module includes:
a first text generation module, configured to generate, based on the video, a first text associated with the video, where the first text includes phrases; and
a second text generation module, configured to generate a second text as the natural language text based on the first text.

Example 20. The apparatus according to any one of Examples 18 to 19, where the natural language text generation module includes:
a video frame extraction module, configured to extract a plurality of video frames from the video;
a video frame deduplication module, configured to deduplicate the plurality of video frames to generate a plurality of deduplicated frames; and
a deduplicated frame recognition module, configured to recognize at least one deduplicated frame among the plurality of deduplicated frames to generate the first text associated with the video.

Example 21. The apparatus according to any one of Examples 18 to 20, where the first text generation module further includes:
an object and text recognition module, configured to recognize an object and an image text included in the deduplicated frame;
an object-to-text conversion module, configured to determine an object text associated with the object; and
phrase generation module, configured to generate, based on the object text and the image text, phrases associated with the video.

Example 22. The apparatus according to any one of Examples 18 to 21, where the first text generation module further includes:
an audio extraction module, configured to extract audio from the video;
a speech text generation module, configured to perform speech recognition on the audio to generate a speech text; and
an associated text generation module, configured to generate, based on the key phrase and the speech text, the first text associated with the video.

Example 23. The apparatus according to any one of Examples 18 to 22, where the phrase generation module includes:
a first extended term determination module, configured to determine, based on a predetermined template, a first extended term semantically associated with the object text and/or the image text; and
a first phrase generation module, configured to generate the phrases based on the object text, the image text, and the first extended term.

Example 24. The apparatus according to any one of Examples 18 to 23, where the speech text generation module includes:
a text paragraph conversion module, configured to convert a recognized speech into a text paragraph;
a second extended term generation module, configured to determine, based on a preset semantic library, a second extended term semantically associated with the text paragraph; and
a first speech text generation module, configured to generate the speech text based on the text paragraph and the second extended term.

Example 25. The apparatus according to any one of Examples 18 to 24, where the natural language text generation module includes:
a first output text generation module, configured to generate a first output text based on the understanding of the first text by a first pre-trained generative model;
a second output text generation module, configured to generate a second output text based on the understanding of the first text by a second pre-trained generative model; and
a natural language text determination module, configured to generate the second text based on the first output text and the second output text.

Example 26. The apparatus according to any one of Examples 18 to 25, where the video-related content obtaining module includes:
a generated video obtaining module, configured to obtain the generated video through a generative content model based on the natural language text.

Example 27. The apparatus according to any one of Examples 18 to 26, where the video-related content obtaining module further includes:
a retrieval term generation module, configured to determine, based on semantics of the natural language text, a retrieval term associated with the natural language text; and
a retrieved video obtaining module, configured to obtain the retrieved video from a video library based on the retrieval term.

Example 28. The apparatus according to any one of Examples 18 to 27, where the video-related content obtaining module further includes:
a retrieved image-text obtaining module, configured to obtain the retrieved image-text from an image-text library based on the retrieval term.

Example 29. The apparatus according to any one of Examples 18 to 28, further including:
a relevance determination module, configured to determine relevance between each piece of content in the video-related content and the video; and
a ranking determination module, configured to determine ranking of each piece of content in the video-related content based on the relevance.

Example 30. The apparatus according to any one of Examples 18 to 29, where the natural language text includes at least a first question, and the apparatus further includes:
a first thumbnail group display module, configured to display a first set of thumbnails of video-related content associated with the first question; and
a video-related content display module, configured to display, in response to the user selecting a thumbnail from the first set of thumbnails, the video-related content corresponding to the selected thumbnail.

Example 31. The apparatus according to any one of Examples 18 to 30, where the first thumbnail set display module includes:
a category display module, configured to display a plurality of categories associated with the video-related content; and
a thumbnail display module, configured to display, in response to the user selecting a first category among the plurality of categories, thumbnails of the video-related content associated with the first category.

Example 32. The apparatus according to any one of Examples 18 to 31, further including:
a video shooting page display module, configured to display a video shooting page in response to a touch operation of the user on a control for reshooting.

Example 33. The apparatus according to any one of Examples 18 to 32, further including:
a control display module, configured to display a second control, a third control, and/or a fourth control in response to a touch operation of the user on a first control, where the second control is configured to trigger the display of a text question interface when touched, the third control is configured to trigger the display of an image-text question interface when touched, and the fourth control is configured to trigger the display of a video question interface when touched.

Example 34. The apparatus according to any one of Examples 18 to 33, further including:
a combined video publishing module, configured to publish, in response to a touch operation of the user on a fifth control, a combined video that includes the video and the video-related content.

Example 35. An electronic device, including:
a processor; and
a memory coupled to the processor, where the memory has instructions stored therein that, when executed by the processor, causes the electronic device to perform actions, and the actions are used to obtain video-related content, and include:
   generating, based on a video, a natural language text associated with the video;
   obtaining, based on the natural language text, video-related content associated with the video, where the video-related content includes at least one of a generated video, a retrieved video, or a retrieved image-text; and
   displaying the natural language text and thumbnails corresponding to the video-related content.

Example 36. The electronic device according to Example 35, where generating the natural language text associated with the video includes:
generating, based on the video, a first text associated with the video, where the first text includes phrases;
   and
generating a second text as the natural language text based on the first text.

Example 37. The electronic device according to any one of Examples 35 to 36, where generating the first text associated with the video includes:
extracting a plurality of video frames from the video;
deduplicating the plurality of video frames to generate a plurality of deduplicated frames; and
recognizing at least one deduplicated frame among the plurality of deduplicated frames to generate the first text associated with the video.

Example 38. The electronic device according to any one of Examples 35 to 37, where generating the first text associated with the video includes:
recognizing an object and an image text included in the deduplicated frame;
determining an object text associated with the object; and
generating, based on the object text and the image text, phrases associated with the video.

Example 39. The electronic device according to any one of Examples 35 to 38, where generating the first text associated with the video further includes:
extracting audio from the video;
performing speech recognition on the audio to generate a speech text; and
generating the first text associated with the video based on the key phrase and the speech text.

Example 40. The electronic device according to any one of Examples 35 to 39, where generating the phrases associated with the video includes:
determining, based on a predetermined template, a first extended term semantically associated with the object text and/or the image text; and
generating the phrases based on the object text, the image text, and the first extended term.

Example 41. The electronic device according to any one of Examples 35 to 40, where generating the speech text includes:
converting a recognized speech into a text paragraph;
determining, based on a preset semantic library, a second extended term semantically associated with the text paragraph; and
generating the speech text based on the text paragraph and the second extended term.

Example 42. The electronic device according to any one of Examples 35 to 41, where generating the natural language text includes:
generating a first output text based on the understanding of the first text by a first pre-trained generative model;
generating a second output text based on the understanding of the first text by a second pre-trained generative model; and
generating the second text based on the first output text and the second output text.

Example 43. The electronic device according to any one of Examples 35 to 42, where obtaining the video-related content associated with the video includes:
obtaining the generated video through a generative content model based on the natural language text.

Example 44. The electronic device according to any one of Examples 35 to 43, where obtaining the video-related content associated with the video further includes:
determining, based on semantics of the natural language text, a retrieval term associated with the natural language text; and
obtaining the retrieved video from a video library based on the retrieval term.

Example 45. The electronic device according to any one of Examples 35 to 44, where obtaining the video-related content associated with the video further includes:
obtaining the retrieved image-text from an image-text library based on the retrieval term.

Example 46. The electronic device according to any one of Examples 35 to 45, where the actions further include:
determining relevance between each piece of content in the video-related content and the video; and
determining ranking of each piece of content in the video-related content based on the relevance.

Example 47. The electronic device according to any one of Examples 35 to 46, where the natural language text includes at least a first question, and the actions further includes:
displaying a first set of thumbnails of video-related content associated with the first question; and
displaying, in response to a user selecting a thumbnail from the first set of thumbnails, the video-related content corresponding to the selected thumbnail.

Example 48. The electronic device according to any one of Examples 35 to 47, where displaying the first set of thumbnails of the video-related content associated with the first question includes:
displaying a plurality of categories associated with the video-related content; and
displaying, in response to the user selecting a first category among the plurality of categories, thumbnails of the video-related content associated with the first category.

Example 49. The electronic device according to any one of Examples 35 to 48, where the actions further include:
displaying a video shooting page in response to a touch operation of the user on a control for reshooting.

Example 50. The electronic device according to any one of Examples 35 to 49, where the actions further include:
displaying a second control, a third control, and/or a fourth control in response to a touch operation of the user on a first control, where the second control is configured to trigger the display of a text question interface when touched, the third control is configured to trigger the display of an image-text question interface when touched, and the fourth control is configured to trigger the display of a video question interface when touched.

Example 51. The electronic device according to any one of Examples 35 to 50, where the actions further include:
publishing, in response to a touch operation of the user on a fifth control, a combined video that includes the video and the video-related content.

Example 52. A computer-readable storage medium, having one or more computer instructions stored therein that, when executed by a processor, cause the method according to any one of Examples 1 to 17 to be implemented.

Although the present disclosure has been described using a language specific to structural features and/or method logical actions, it should be understood that the subject matter defined in the appended claims is not necessarily limited to the specific features or actions described above. In contrast, the specific features and actions described above are merely example forms of implementing the claims.

## Claims

1. A method for obtaining video-related content, comprising:
generating, based on a video, a natural language text associated with the video;
obtaining, based on the natural language text, video-related content associated with the video, wherein the video-related content comprises at least one of a generated video, a retrieved video, or a retrieved image-text; and
displaying the natural language text and a thumbnail corresponding to the video-related content.

2. The method according to claim 1, wherein generating the natural language text associated with the video comprises:
generating, based on the video, a first text associated with the video, wherein the first text comprises phrases; and
generating a second text as the natural language text based on the first text.

3. The method according to claim 2, wherein generating the first text associated with the video comprises:
extracting a plurality of video frames from the video;
generating a plurality of deduplicated frames by deduplicating the plurality of video frames; and
generating the first text associated with the video by recognizing at least one deduplicated frame of the plurality of deduplicated frames.

4. The method according to claim 3, wherein generating the first text associated with the video comprises:
recognizing an object and an image text comprised in the deduplicated frame;
determining an object text associated with the object; and
generating, based on the object text and the image text, phrases associated with the video.

5. The method according to claim 4, wherein generating the first text associated with the video further comprises:
extracting audio from the video;
generating a speech text by performing speech recognition on the audio; and
generating, based on the phrases and the speech text, the first text associated with the video.

6. The method according to claim 4, wherein generating the phrases associated with the video comprises:
determining, based on a predetermined template, a first extended term semantically associated with the object text and/or the image text; and
generating the phrases based on the object text, the image text, and the first extended term.

7. The method according to claim 5, wherein generating the speech text comprises:
converting the recognized speech into a text paragraph;
determining, based on a preset semantic library, a second extended term semantically associated with the text paragraph; and
generating the speech text based on the text paragraph and the second extended term.

8. The method according to claim 2, wherein generating the natural language text associated with the video comprises:
generating a first output text based on understanding of the first text by a first pre-trained generative model;
generating a second output text based on understanding of the first text by a second pre-trained generative model; and
generating the second text based on the first output text and the second output text.

9. The method according to claim 1, wherein obtaining the video-related content associated with the video comprises:
obtaining the generated video through a generative content model based on the natural language text.

10. The method according to claim 9, wherein obtaining the video-related content associated with the video further comprises:
determining, based on semantics of the natural language text, a retrieval term associated with the natural language text; and
obtaining the retrieved video from a video library based on the retrieval term.

11. The method according to claim 10, wherein obtaining the video-related content associated with the video further comprises:
obtaining the retrieved image-text from an image-text library based on the retrieval term.

12. The method according to claim 1, further comprising:
determining relevance between each of the video-related content and the video; and
determining a ranking of each of the video-related content based on the relevance.

13. The method according to claim 1, wherein the natural language text comprises at least a first question, and the method further comprises:
displaying a first set of thumbnails of the video-related content associated with the first question; and
displaying, in response to a user selecting a thumbnail from the first set of thumbnails, the video-related content corresponding to the selected thumbnail.

14. The method according to claim 13, wherein displaying the first set of thumbnails of the video-related content associated with the first question comprises:
displaying a plurality of categories associated with the video-related content; and
displaying, in response to the user selecting a first category from the plurality of categories, a thumbnail of the video-related content associated with the first category.

15. The method according to claim 13, further comprising:
displaying a video shooting page in response to a touch operation of the user on a control for reshooting.

16. The method according to claim 13, further comprising:
displaying, in response to a touch operation of the user on a first control, a second control, a third control, and/or a fourth control, wherein the second control is configured to trigger a display of a text question interface when touched, the third control is configured to trigger a display of an image-text question interface when touched, and the fourth control is configured to trigger a display of a video question interface when touched.

17. The method according to claim 13, further comprising:
publishing, in response to a touch operation of the user on a fifth control, a combined video that comprises the video and the video-related content.

18. An apparatus for obtaining video-related content, comprising:
a natural language text generation module, configured to generate, based on a video, a natural language text associated with the video;
a video-related content obtaining module, configured to obtain, based on the natural language text, the video-related content associated with the video, wherein the video-related content comprises at least one of a generated video, a retrieved video, or a retrieved image-text; and
a video-related content display module, configured to display the natural language text and a thumbnail corresponding to the video-related content.

19. An electronic device, comprising:
a processor; and
a memory coupled to the processor, wherein the memory has instructions stored therein that, when executed by the processor, cause the electronic device to perform the method according to any of claims 1 to 17.

20. A computer-readable storage medium, having computer-executable instructions stored therein that, when executed by a processor, implement the method according to any of claims 1 to 17.
